# EUROPÄISCHE PATENTSCHRIFT

(11) **EP 1 369 556 B1**
(45) Veröffentlichungstag und Bekanntmachung des Hinweises auf die Patenterteilung: **12.09.2007**
(21) Anmeldenummer: 02012187.7
(22) Anmeldetag: 03.06.2002
(51) Int. Cl.: F01M 11/12, G01F 23/00, G05D 9/02

(54) **Befüllvorrichtung zur Ölstandsregulierung bei Ölwannen in Motoren und Getrieben**
Filling device for controlling the oil level in an oil pan of a combustion engine or a transmission
Dispositif pour controler le niveau d'huile de remplissage d'un carter de moteur a combustion ou d'une transmission

(43) Veröffentlichungstag der Anmeldung: 10.12.2003
(73) Patentinhaber: IBS Filtran Kunststoff-/Metallerzeugnisse GmbH, 51597 Morsbach (DE)
(72) Erfinder: Jacob, Michael, 51597 Morsbach (DE)
(74) Vertreter: Lang, Friedrich

(56) Entgegenhaltungen:
- DE-A- 4 311 905
- FR-A- 2 795 174
- US-A- 3 662 858
- US-A- 5 808 187

## Beschreibung

Die Erfindung betrifft eine Befüllvorrichtung zur Ölstandsregulierung bei Ölwannen in Motoren und Getrieben, sowie eine Ölwanne, enthaltend die erfindungsgemäße Befüllvorrichtung.

Für bestimmte Anwendungsfälle, insbesondere für automatische Getriebe in Kraftfahrzeugen und auch für Ölwannen in Motoren ist es wichtig, den Füllstand des betreffenden Öls genau einzustellen, um einen problemlosen Betrieb des Getriebes bzw. des Motors sicherzustellen.

Im Stand der Technik wird daher beispielsweise ein Einfüllloch an der Seite der Ölwanne oder seitlich am Getriebe oder Motor angebracht, wodurch das Niveau des Ölstandes durch die Positionierung dieses Einfüllloches bestimmt werden kann.

Will man seitliche Einfüllöffnungen vermeiden, so wird im Stand der Technik weiterhin vorgeschlagen, das Öl von unten, d.h. über den Ölauslass, welcher im Boden der Ölwanne angebracht ist, einzufüllen.

So wird in der DE 43 11 905 eine Befüll- und Kontrollvorrichtung für einen mit einer Flüssigkeit eines definierten Niveaus befüllbaren Behälters, insbesondere für ein automatisches Getriebe in einem Kraftfahrzeug vorgeschlagen, die eine sehr komplizierte Anordnung aufweist, mit Ölablassschraube, Kugelrückschlagventil, einen in den Innenraum der Ölwanne senkrecht hineinragenden Rohrabschnitt, dessen oberes, freies Ende die Überlauföffnung darstellt, usw..

In US 5,808,187 ist ein Fluidpegelindikator, gemäß Anspruch 1, erster Teil, für eine Ölwanne offenbart, welcher mindestens ein Standrohr aufweist, das mit der Ölwanne verbunden ist, wobei dessen Öffnung mittels einer Schraube verschlossen ist. Öl kann aus der Ölwanne abfließen, wenn es den oberen Rand des Standrohres übersteigt und in das Rohrinnere eindringt, wobei die Schraube mindestens teilweise vom Standrohr gelockert werden muss, so dass sich ein Freiraum zwischen Standrohr und Schraubenkopf bildet. Wenn das Öl den oberen Rand des Standrohres nicht übersteigt, kann kein Öl nach außen abgelassen werden.

Die technische Aufgabe der vorliegenden Erfindung ist es daher, den Aufbau einer Befüllvorrichtung zur Ölstandsregulierung bei Ölwannen in Motoren und Getrieben zu vereinfachen und dennoch die Sicherheit des Servicepersonals beim Ablassen des heißen Öls und bei der Wartung der Ölwanne zu gewährleisten.

Die technische Aufgabe wird gelöst durch eine Befüllvorrichtung zur Ölstandsregulierung bei Ölwannen in Motoren und Getrieben, mit einer Öffnung 1 im Boden der Ölwanne 2, die mit einer Ölablass-Schraube 10 verschließbar ist, wobei ein Öleinfüllkragen 3 über der Öffnung 1 angebracht ist und der Öleinfüllkragen 3 in den Innenraum 4 der Ölwanne hineinragt und wobei ein Befüllrohr 5 als Verlängerung des Öleinfüllkragens 3 lösbar an dem Öleinfüllkragen 3 angebracht ist und das freie Ende 6 des Befüllrohres 5 eine Überlauföffnung 7 darstellt, wobei das Befüllrohr 5 im Verhältnis zum Öleinfüllkragen 3 so verschoben werden kann, dass eine von der Wand des Befüllrohres verdeckte Aussparung 9 im Öleinfüllkragen frei wird und das Öl aus der Ölwanne über diese Aussparung 9 und durch die Öffnung 1 im Ölwannenboden 2 nach außen gelangen kann.

In einer bevorzugten Ausführungsform sind das Befüllrohr 5 und der Öleinfüllkragen miteinander verrastbar.

Die Überlauföffnung 7 des Befüllrohres 5 bestimmt das definierte Niveau 8 des Ölstands.

Das Befüllrohr 5, das an dem Öleinfüllkragen 3 angebracht ist, kann durch angeformte Rasthaken 12, die sich entweder am Befüllrohr 5 oder am Öleinfüllkragen 3 befinden, durch Einrastung fest positioniert werden. In einer besonders bevorzugten Ausführungsform sind das Befüllrohr 5 und der Öleinfüllkragen 3 im eingerasteten Zustand so abgedichtet, dass das Öl in der Ölwanne nur über die Überlauföffnung 7 nach außen gelangen kann. Der Spalt zwischen dem Befüllrohr 5 und dem Öleinfüllkragen 3 ist bereits durch die Passspannung der Teile so stark abgedichtet, dass nur wenige Topfen Öl hindurchgelangen können. In einer bevorzugten Ausführungsform kann innerhalb dieses Spaltes zwischen dem Befüllrohr 5 . und dem Öleinfüllkragen 3 eine Gummidichtung angeordnet werden.

In einer weiteren bevorzugten Ausführungsform ist das Befüllrohr 5 innerhalb des Öleinfüllkragens 3 angeordnet. In einer alternativen Ausführungsform ist das Befüllrohr 5 außerhalb des Öleinfüllkragens angeordnet, so dass der Öleinfüllkragen 3 innerhalb des Befüllrohres 5 liegt.

In einer weiteren Ausführungsform kann das Befüllrohr 5 so verschoben werden, dass es sich vom Öleinfüllkragen 3 löst.

In einer alternativen Ausführungsform ist das Befüllrohr 5 im Verhältnis zum Öleinfüllkragen 3 nur innerhalb bestimmter Grenzen verschiebbar und kann in ausgezogener Form. d. h. wenn das Befüllrohr 5 in Richtung Innenraum 4 der Ölwanne verschoben ist, ebenfalls fixiert werden, wobei in diesem Zustand das Öl aus der Ölwanne über die Aussparung 9 im Öleinfüllkragen und weiter durch die Öffnung 1 im Boden 2 der Ölwanne nach außen gelangen kann.

Vorzugsweise ist der Öleinfüllkragen 3 so angeordnet, dass er im Wesentlichen senkrecht in den Innenraum 4 der Ölwanne hineinragt. Gleiches gilt entsprechend für das Befüllrohr 5.

In einer weiteren bevorzugten Ausführungsform wird die Öffnung 1 im Ölwannenboden 2 von einer Gewindebuchse 11 umfasst, so dass eine Ölablassschraube 10 von außen in die Gewindebuchse 11 eingeschraubt werden kann. In einer weiteren Ausführungsform ist der Öleinfüllkragen 3 an der Ölwanne angeformt. So kann der Öleinfüllkragen 3 und die Ölwanne einstückig ausgebildet sein. In einer alternativen Ausführungsform kann der Öleinfüllkragen 3 an der Gewindebuchse 11 angeordnet sein. Dabei können Öleinfüllkragen 3 und die Gewindebuchse 11 einstückig ausgebildet sein. Vorzugsweise sind das Befüllrohr 5 und/oder der Öleinfüllkragen 3 aus Kunststoff gefertigt.

Zum Einfüllen des Öls in die Ölwanne wird wie folgt vorgegangen: Das Befüllrohr 5 wird (je nach Ausführungsform) in oder über den Öleinfüllkragen 3 geschoben, bis es einrastet. Nach Anbringen der Ölwanne in die Position im Kraftfahrzeug kann Öl beispielsweise über einen Schlauch eingefüllt werden, der durch die Öffnung 1 im Boden 2 der Ölwanne und durch den Hohlraum des Öleinfüllkragens 3 und des Befüllrohres 5 in den Innenraum 4 der Ölwanne hineingeschoben wird. Erreicht das Niveau des Ölstandes das freie Ende 6 des Befüllrohres, welches als Überlauföffnung 7 fungiert, so ist der maximale Ölstand erreicht, weil zusätzlich eingefülltes Öl über die Überlauföffnung 7 wieder hinausfließt. Das Niveau des Ölstandes kann variiert werden, abhängig von der genauen Ausführungsform der Befüllvorrichtung, z.B. abhängig von der Länge des Befüllrohres 5 und damit abhängig von der Gesamtlänge der Röhre. Hat der Ölstand sein definiertes Niveau 8 erreicht, wird der Schlauch aus der Ölwanne herausgezogen und die Ölablassschraube 10 in die Öffnung 1 im Ölwannenboden 2 eingeschraubt und somit die Ölwanne verschlossen.

Soll das Öl aus der Ölwanne abgelassen werden, so wird die Ölablassschraube 10 aus der Öffnung 1 im Ölwannenboden 2 herausgedreht. Dabei fließt lediglich das Öl heraus, welches durch die Bewegung des Kraftfahrzeuges bzw. der Ölwanne in den Hohlraum des Befüllrohres 5 bzw. des Öleinfüllkragens 3 gelangt ist. Zum Ablassen des restlichen Öles aus der Ölwanne wird das Befüllrohr 5 mit einem Werkzeug nach oben geschoben, so dass die eingerastete Verbindung zwischen Befüllrohr 5 und Öleinfüllkragen 3 gelöst wird. Das Öl kann nun durch den entstehenden Spalt zwischen Befüllrohr 5 und Öleinfüllkragen 3 in den Hohlraum und schließlich nach außen fließen. Vorzugsweise ist eine Öffnung oder Aussparung 9 an der Seite des Öleinfüllkragens 3 vorgesehen. Durch Lösen des Befüllrohres 5 wird diese Aussparung 9 frei zugänglich, weil es nun nicht mehr von der Wand des Befüllrohres 5 verdeckt und abgedichtet wird. So kann nun das Öl aus der Ölwanne über diese seitliche Öffnung 9 im Öleinfüllkragen 3 in den Hohlraum der Röhre gelangen und anschießend über die Öffnung 1 im Ölwannenboden 2 nach außen fließen und aufgefangen werden.

Je nach Ausführungsform kann das Befüllrohr 5 im ausgezogenem Zustand, d.h. im geöffneten Zustand in einer weiteren Position eingerastet werden oder soweit nach oben gehoben werden, dass es sich vom Öleinfüllkragen 3 löst und in die Ölwanne fällt. Je tiefer die seitlichen Öffnungen 9 im Öleinfüllkragen angeordnet sind, desto weniger Öl verbleibt in der Ölwanne. Nachdem das Öl aus der Ölwanne abgelassen wurde, kann nun die Ölwanne abmontiertet werden, wobei möglicherweise noch etwas Öl in der Ölwanne verblieben ist, und mit den Wartungsarbeiten fortgefahren werden.

Weiterhin wird die technische Aufgabe gelöst durch eine Befüllvorrichtung zur Ölstandsregulierung bei Ölwannen in Motoren und Getrieben, mit einer Öffnung 101 im Boden der Ölwanne 102, die mit einer Ölablass-Schraube 110 verschließbar ist, wobei ein Öleinfüllkragen 103 über der Öffnung 101 angeordnet ist und der Öleinfüllkragen 103 in den Innenraum 104 der Ölwanne hineinragt und das freie Ende 106 des Öleinfüllkragens 103 eine Überlauföffnung 107 bildet, wobei ein innerhalb des Öleinfüllkragen 103 angebrachtes ringförmiges oder rohrförmiges Element 105 in Richtung der Längsachse des Öleinfüllkragens 103 verschiebbar und/oder radial drehbar ist und eine seitliche Öffnung 109 im Öleinfüllkragen öffnet oder verschließt.

Zum Einfüllen des Öls in die Ölwanne wird wie folgt vorgegangen: Das ringförmige oder rohrförmige Element 105 wird so positioniert, dass es die seitliche Aussparung 109 im Öleinfüllkragen 103 verschließt. Nach Anbringen der Ölwanne in die Position im Kraftfahrzeug kann Öl beispielsweise über einen Schlauch eingefüllt werden, der durch die Öffnung im Boden der Ölwanne und durch den Hohlraum des Öleinfüllkragens 103 in den Innenraum 104 der Ölwanne hineingeschoben wird. Erreicht das Niveau des Ölstandes der Überlauföffnung 107, so ist der maximale Ölstand erreicht. Das Niveau des Ölstandes wird von der Länge des Öleinfüllkragens 103 bestimmt. Hat der Ölstand sein definiertes Niveau 108 erreicht, wird der Schlauch aus der Ölwanne herausgezogen und die Ölablassschraube 110 in die Öffnung 101 im Ölwannenboden 102 eingeschraubt und somit die Ölwanne verschlossen.

Soll das Öl aus der Ölwanne abgelassen werden, so wird die Ölablassschraube 110 aus der Öffnung im Ölwannenboden herausgedreht. Dabei fließt lediglich das Öl heraus, welches durch die Bewegung des Kraftfahrzeuges bzw. der Ölwanne in den Hohlraum des Öleinfüllkragens 103 gelangt ist. Zum Ablassen des restlichen Öles aus der Ölwanne wird das ringförmige oder rohrförmige Element 105 mit einem Werkzeug verschoben, so dass die von diesem Element verdeckte Öffnung im Öleinfüllkragen geöffnet wird. Dabei kann das ringförmige oder rohrförmige Element in Richtung Längsachse verschoben werden. In einer alternativen Ausführungsform wird das ringförmige oder rohrförmige Element radial gedreht, so dass eine Aussparung in diesem ringförmigen oder rohrförmigen Element 105 und die Aussparung 109 im Öleinfüllkragen 103 zur Deckung kommt. Das Öl kann nun aus der Ölwanne über diese seitliche Öffnung 109 im Öleinfüllkragen 103 und anschießend über die Öffnung 101 im Ölwannenboden 102 nach außen fließen und aufgefangen werden. Nachdem das Öl aus der Ölwanne abgelassen wurde, kann nun die Ölwanne abmontiertet werden, wobei möglicherweise noch etwas Öl in der Ölwanne vorhanden ist und mit den Wartungsarbeiten fortgefahren werden.

In den folgenden Figuren wird der Gegenstand der Erfindung näher erläutert.

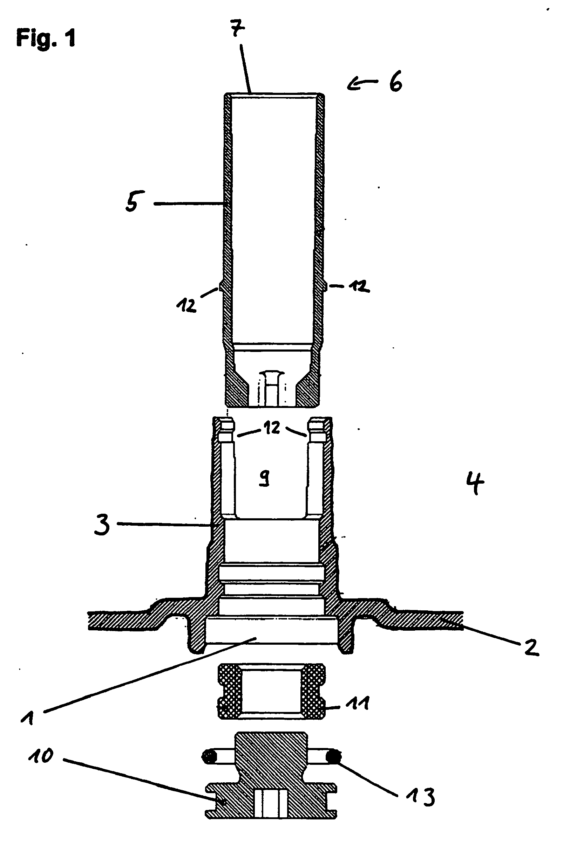

Figur 1 zeigt einen Schnitt durch die Befüllvorrichtung zur Ölstandsregulierung im demontierten Zustand. Bei der in Figur 1 dargestellten Ausführungsform ist der Öleinfüllkragen 3 mit dem Ölwannenboden 2 in einstückiger Form ausgeführt. Der Öleinfüllkragen 3 sowie das Befüllrohr 5 weisen eine Rastung 12 auf, damit das Befüllrohr 5, nachdem es in den Öleinfüllkragen 3 hineingeschoben wurde, am Öleinfüllkragen fest positioniert werden kann. Weiterhin ist eine Gewindebuchse 11 vorgesehen, die die Öffnung 1 im Ölwannenboden 2 umfasst und in die die Ölablassschraube 10 unter Verwendung eines Dichtungsringes 13 hineingedreht werden kann.

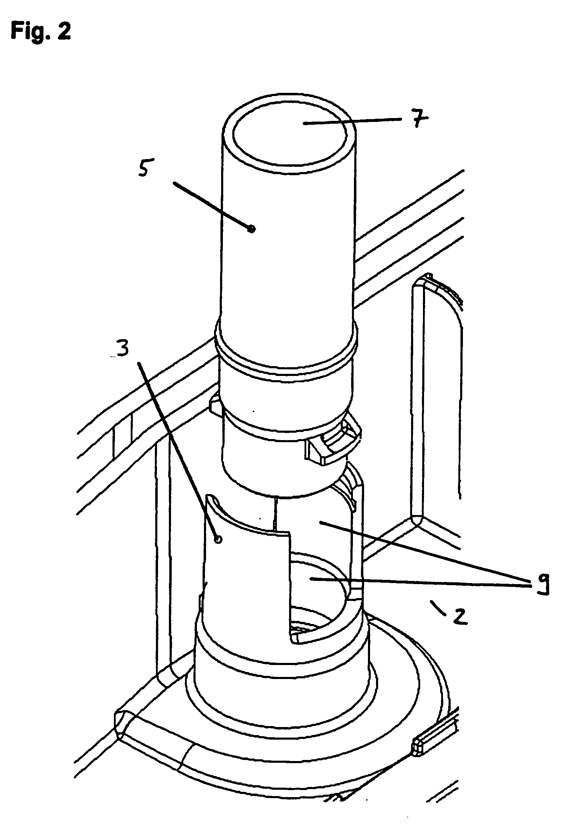

Figur 2 zeigt eine perspektivische Ansicht der Befüllvorrichtung, wobei das Befüllrohr 5 noch nicht in den Öleinfüllkragen 3 hineingeschoben wurde. In dieser Darstellung sind die Aussparungen 9 im Öleinfüllkragen 3 erkennbar, durch die das Öl aus der Ölwanne nach außen gelangen kann, sobald das Befüllrohr 5 so weit nach oben geschoben wurde, dass diese Aussparung 9 nicht mehr von der Wand des Befüllrohres 5 verdeckt und abgedichtet wird.

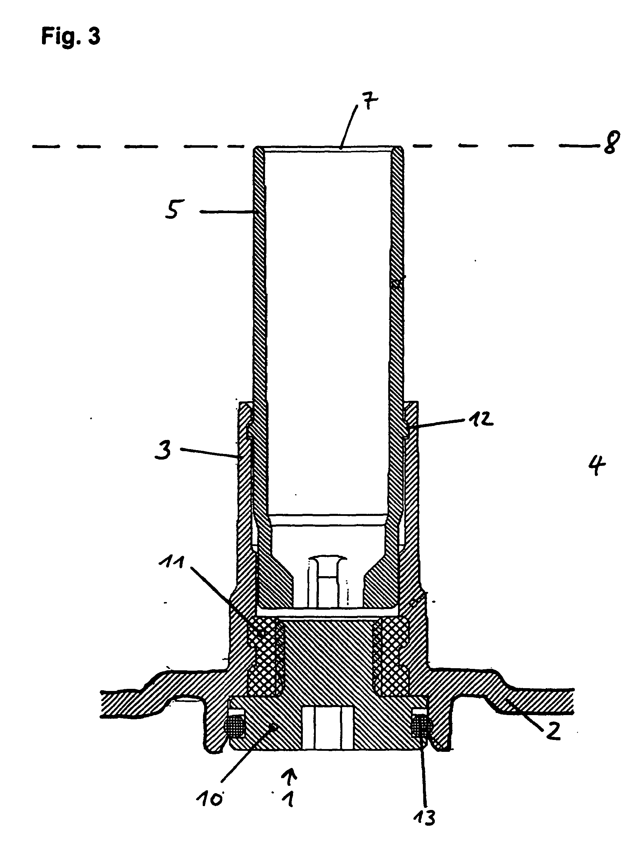

Figur 3 zeigt die Befüllvorrichtung im Montagezustand, wobei das Befüllrohr 5 in den Öleinfüllkragen 3 hineingeschoben wurde und mittels Rastung 12 eingerastet ist. Weiterhin ist die Ölablassschraube 10 in die Gewindebuchse 11 geschraubt, die die Öffnung 1 umfasst. Die Randnummer 13 bezeichnet den für die Ölablassschraube vorgesehen Dichtring. Mit der Randnummer 8 ist das Niveau des Ölstandes dargestellt.

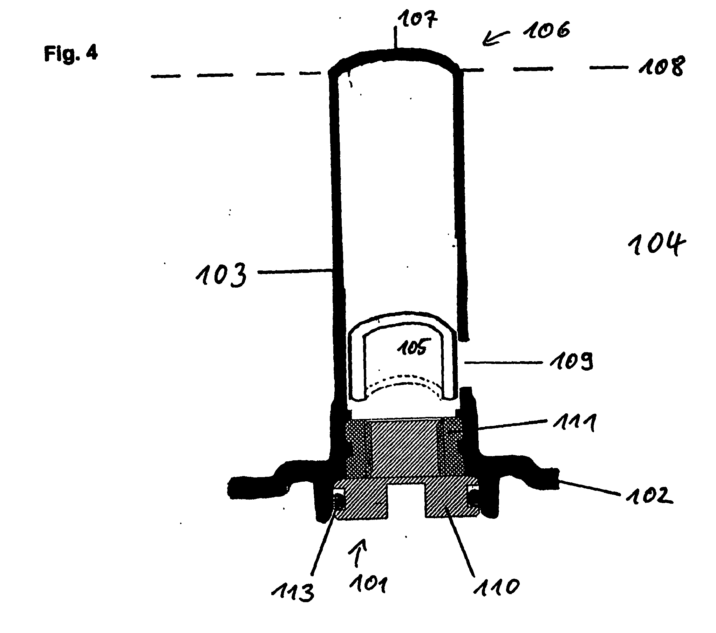

Figur 4 zeigt eine schematische Schnittansicht einer weiteren Befüllvorrichtung, wobei ein Öleinfüllkragen 103 über der Öffnung 101 im Boden der Ölwanne 102 angeordnet ist. Diese Öffnung 101 ist mit einer Ölablass-Schraube 110 verschließbar. Der Öleinfüllkragen 103 ragt in den Innenraum 104 der Ölwanne hinein. In dieser Ausführungsform bildet das freie Ende 106 des Öleinfüllkragens 103 eine Überlauföffnung 107. Ein innerhalb des Öleinfüllkragen 103 angebrachtes ringförmiges oder rohrförmiges Element 105 umfasst einen Abschnitt des Inneren des Öleinfüllkragens 103 und ist in Richtung der Längsachse des Öleinfüllkragens 103 verschiebbar, oder radial drehbar. Das ringförmige oder rohrförmige Element 105 verschießt eine seitliche Öffnung 109 im Öleinfüllkragen. Wird das ringförmige oder rohrförmige Element 105 mit einem Werkzeug verschoben oder radial gedreht, dann kann das Öl aus der Ölwanne über diese Öffnung 109 nach außen fließen.

### Bezugsziffern

- 1: Öffnung
- 2: Boden der Ölwanne
- 3: Öleinfüllkragen
- 4: Innenraum
- 5: Befüllrohr
- 6: freies Ende des Befüllrohres
- 7: Überlauf-Öffnung
- 8: definiertes Niveau des Ölstandes
- 9: Aussparung in der Wand des Öleinfüllkragens
- 10: Ölablass-Schraube
- 11: Gewindebuchse
- 12: Rastung
- 13: Dichtungsring

- 101: Öffnung
- 102: Boden der Ölwanne
- 103: Öleinfüllkragen
- 104: Innenraum
- 105: ringförmiges oder rohrförmiges Element
- 106: freies Ende des Öleinfüllkragens
- 107: Überlauföffnung
- 108: definiertes Niveau des Ölstandes
- 109: seitliche Öffnung in der Wand des Öleinfüllkragens
- 110: Ölablass-Schraube
- 111: Gewindebuchse
- 113: Dichtungsring

## Patentansprüche

1. Befüllvorrichtung zur Ölstandsregulierung bei Ölwannen in Motoren und Getrieben, mit einer Öffnung (1) im Boden der Ölwanne (2), die mit einer Ölablass-Schraube (10) verschließbar ist, wobei ein Öleinfüllkragen (3) über der Öffnung (1) angebracht ist und der Öleinfüllkragen (3) in den Innenraum (4) der Ölwanne hineinragt und wobei ein Befüllrohr (5) als Verlängerung des Öleinfüllkragens (3) lösbar an dem Öleinfüllkragen (3) angebracht ist und das freie Ende (6) des Befüllrohres (5) eine Überlauföffnung (7) darstellt, **dadurch gekennzeichnet, dass** das Befüllrohr (5) im Verhältnis zum Öleinfüllkragen (3) so verschoben werden kann, dass eine von der Wand des Befüllrohres verdeckte Aussparung (9) im Öleinfüllkragen frei wird und das Öl aus der Ölwanne über diese Aussparung (9) und durch die Öffnung (1) im Ölwannenboden (2) nach außen gelangen kann.

2. Die Befüllvorrichtung nach Anspruch 1, **dadurch gekennzeichnet, dass** das Befüllrohr (5) und der Öleinfüllkragen (3) miteinander verrastbar sind.

3. Die Befüllvorrichtung nach Anspruch 1 oder 2, **dadurch gekennzeichnet, dass** durch die Überlauföffnung (7) das definierte Niveau (8) des Ölstands bestimmt wird.

4. Die Befüllvorrichtung nach den Ansprüchen 1 bis 3, **dadurch gekennzeichnet, dass** Befüllrohr (5) und Öleinfüllkragen (3) im eingerasteten Zustand so abgedichtet sind, dass das Öl in der Ölwanne nur Ober die Überlauföffnung (7) nach außen gelangen kann.

5. Die Befüllvorrichtung nach den Ansprüchen 1 bis 4, **dadurch gekennzeichnet, dass** das Befüllrohr (5) innerhalb des Öleinfüllkragens (3) angeordnet ist.

6. Die Befüllvorrichtung nach den Ansprüchen 1 bis 5, **dadurch gekennzeichnet, dass** das Befüllrohr (5) außerhalb des Öleinfüllkragens (3) angeordnet ist.

7. Die Befüllvorrichtung nach den Ansprüchen 1 bis 6, **dadurch gekennzeichnet, dass** das Befüllrohr (5) so verschoben werden kann, dass es sich vom Öleinfüllkragen (3) löst.

8. Die Befüllvorrichtung nach den Ansprüchen 1 bis 7, **dadurch gekennzeichnet, dass** das Befüllrohr (5) im Verhältnis zum Öleinfüllkragen (3) nur innerhalb bestimmter Grenzen verschiebbar ist, und in ausgezogener Form, d.h. wenn das Befüllrohr (5) in Richtung Innenraum (4) der Ölwanne verschoben ist, ebenfalls fixiert werden kann, wobei in diesem Zustand das Öl aus der Ölwanne über die Aussparung (9) im Öleinfüllkragen (3) durch die Öffnung (1) nach außen gelangen kann.

9. Die Befüllvorrichtung nach den Ansprüchen 1 bis 8, **dadurch gekennzeichnet, dass** der Öleinfüllkragen (3) im Wesentlichen senkrecht in den Innenraum (4) der Ölwanne hineinragt.

10. Die Befüllvorrichtung nach den Ansprüchen 1 bis 9, **dadurch gekennzeichnet, dass** die Öffnung (1) von einer Gewindebuchse (11) umfasst wird, und die Ölablass-Schraube (10) von außen in die Gewindebuchse (11) eingeschraubt wird.

11. Die Befüllvorrichtung nach den Ansprüchen 1 bis 10, **dadurch gekennzeichnet, dass** der Öleinfüllkragen (3) an der Ölwanne angeformt ist.

12. Die Befüllvorrichtung nach Anspruch 10, **dadurch gekennzeichnet, dass** der Öleinfüllkragen (3) an der Gewindebuchse (11) angeordnet ist.

13. Die Befüllvorrichtung nach Anspruch 12, **dadurch gekennzeichnet, dass** der Öleinfüllkragen (3) und die Gewindebuchse (11) einstückig ausgebildet sind.

14. Befüllvorrichtung zur Ölstandsregulierung bei Ölwannen in Motoren und Getrieben, mit einer Öffnung (101) im Boden der Ölwanne (102), die mit einer Ölablass-Schraube (110) verschließbar ist, wobei ein Öleinfüllkragen (103) über der Öffnung (101) angeordnet ist und der Öleinfüllkragen (103) in den Innenraum (104) der Ölwanne hineinragt und das freie Ende (106) des Öleinfüllkragens(103) eine Überlauföffnung (107) bildet, wobei ein innerhalb des Öleinfüllkragens(103) angebrachtes ringförmiges oder rohrförmiges Element (105) in Richtung der Längsachse des Öleinfüllkragens (103) verschiebbar und/oder radial drehbar ist und eine seitliche Öffnung (109) im Öleinfüllkragen öffnet oder verschließt.

15. Ölwanne enthaltend die Befüllvorrichtung nach einem Ansprüche 1 bis 14.

## Claims

1. A filling device for oil level regulation in oil sumps in engines and transmissions, having an opening (1) in the floor of the oil sump (2), which is closable by an oil drain screw (10), an oil charging collar (3) being attached above the opening (1) and the oil charging collar (3) projecting into the inner chamber (4) of the oil sump, and a filling tube (5) being removable attached to the oil charging collar (3) as an extension of the oil charging collar (3) and the free end (6) of the filling tube (5) representing an overflow opening (7), **characterized in that** the filling tube (5) may be displaced in relation to the oil charging collar (3) in such a way that a recess (9) in the oil charging collar concealed by the wall of the filling tube is exposed and the oil from the oil sump may reach the outside via this recess (9) and through the opening (1) in the oil sump floor (2).

2. The filling device according to Claim 1, **characterized in that** the filling tube (5) and the oil charging collar (3) may be engaged with one another.

3. The filling device according to Claim 1 or 2, **characterized in that** the defined level (8) of the oil level is determined by the overflow opening (7).

4. The filling device according to Claims 1 through 3, **characterized in that** filling tube (5) and oil charging collar (3) are sealed in the engaged state in such a way that the oil in the oil sump may only reach the outside via the overflow opening (7).

5. The filling device according to Claims 1 through 4, **characterized in that** the filling tube (5) is situated inside the oil charging collar (3).

6. The filling device according to Claims 1 through 5, **characterized in that** the filling tube (5) is situated outside the oil charging collar (3).

7. The filling device according to Claims 1 through 6, **characterized in that** the filling tube (5) may be displaced in such a way that it detaches from the oil charging collar (3).

8. The filling device according to Claims 1 through 7, **characterized in that** the filling tube (5) is displaceable in relation to the oil charging collar (3) only within specific boundaries, and may also be fixed in the extended form, i.e., when the filling tube (5) is displaced in the direction of the inner chamber (4) of the oil sump, in this state, the oil from the oil sump being able to reach the outside through the opening (1) via the recess (9) in the oil charging collar (3).

9. The filling device according to Claims 1 through 8, **characterized in that** the oil charging collar (3) projects essentially perpendicularly into the inner chamber (4) of the oil sump.

10. The filling device according to Claims 1 through 9, **characterized in that** the opening (1) is enclosed by a threaded socket (11), and the oil drain screw (10) is screwed from the outside into the threaded socket (11).

11. The filling device according to Claims 1 through 10, **characterized in that** the oil charging collar (3) is molded onto the oil sump.

12. The filling device according to Claim 10, **characterized in that** the oil charging collar (3) is situated on the threaded socket (11).

13. The filling device according to Claim 12, **characterized in that** the oil charging collar (3) and the threaded socket (11) are implemented in one piece.

14. A filling device for oil level regulation in oil sumps in engines and transmissions, having an opening (101) in the floor of the oil sump (102), which is closable by an oil drain screw (110), an oil charging collar (103) being situated above the opening (101) and the oil charging collar (103) projecting into the inner chamber (104) of the oil sump and the free end (106) of the oil charging collar (103) forming an overflow opening (107), an annular or tubular element (105) attached inside the oil charging collar (103) being displaceable in the direction of the longitudinal axis of the oil charging collar (103) and/or radially rotatable and opening or closing a lateral opening (109) in the oil charging collar.

15. An oil sump containing the filling device according to one of Claims 1 through 14.

## Revendications

1. Dispositif de remplissage pour la régulation du niveau d'huile dans les cuvettes-carters de moteurs et d'engrenages, avec une ouverture (1) dans le fond de la cuvette-carter (2), qui peut être fermée par une vis de purge d'huile (10), un collet de remplissage d'huile (3) étant disposé par-dessus l'ouverture (1) et ce collet de remplissage d'huile (3) dépassant dans l'espace intérieur (4) de la cuvette-carter, et un tuyau de remplissage (5) qui prolonge le collet de remplissage d'huile (3) étant disposé de manière amovible sur le collet de remplissage d'huile (3) et l'extrémité libre (6) du tuyau de remplissage (5) formant une ouverture de trop-plein (7), **caractérisé en ce que** le tuyau de remplissage (5) peut être décalé par rapport au collet de remplissage d'huile (3) de façon à libérer une découpe (9) cachée par la paroi du tuyau de remplissage dans le collet de remplissage d'huile de sorte que l'huile peut sortir de la cuvette-carter par cette découpe (9) et par l'ouverture (1) dans le fond de la cuvette-carter (2).

2. Dispositif de remplissage selon la revendication 1, **caractérisé en ce que** le tuyau de remplissage (5) et le collet de remplissage d'huile (3) peuvent être emboîtés l'un dans l'autre.

3. Dispositif de remplissage selon la revendication 1 ou 2, **caractérisé en ce que** le niveau défini (8) de l'huile est déterminé par l'ouverture de trop-plein (7).

4. Dispositif de remplissage selon les revendications 1 à 3, **caractérisé en ce que** le tuyau de remplissage (5) et le collet de remplissage d'huile (3) emboîtés sont étanches de telle manière que l'huile de la cuvette-carter ne peut parvenir à l'extérieur que par l'ouverture de trop-plein (7).

5. Dispositif de remplissage selon les revendications 1 à 4, **caractérisé en ce que** le tuyau de remplissage (5) est disposé à l'intérieur du collet de remplissage d'huile (3).

6. Dispositif de remplissage selon les revendications 1 à 5, **caractérisé en ce que** le tuyau de remplissage (5) est disposé à l'extérieur du collet de remplissage d'huile (3).

7. Dispositif de remplissage selon les revendications 1 à 6, **caractérisé en ce que** le tuyau de remplissage (5) peut être décalé de telle manière qu'il se détache du collet de remplissage d'huile (3).

8. Dispositif de remplissage selon les revendications 1 à 7, **caractérisé en ce que** le tuyau de remplissage (5) n'est déplaçable par rapport au collet de remplissage d'huile (3) que dans certaines limites et lorsqu'il est déployé, c'est-à-dire lorsque le tuyau de remplissage (5) est décalé en direction de l'espace intérieur (4) de la cuvette-carter, il peut également être fixé, l'huile pouvant, dans cet état, passer de la cuvette-carter vers l'extérieur par la découpe (9) du collet de remplissage d'huile (3) à travers l'ouverture (1).

9. Dispositif de remplissage selon les revendications 1 à 8, **caractérisé en ce que** le collet de remplissage d'huile (3) dépasse dans l'espace intérieur (4) de la cuvette-carter de façon sensiblement perpendiculaire.

10. Dispositif de remplissage selon les revendications 1 à 9, **caractérisé en ce que** l'ouverture (1) est entourée par une douille filetée (11) et la vis de purge d'huile (10) est vissée par l'extérieur dans la douille filetée (11).

11. Dispositif de remplissage selon les revendications 1 à 10, **caractérisé en ce que** le collet de remplissage d'huile (3) est formé d'un seul tenant sur la cuvette-carter.

12. Dispositif de remplissage selon la revendication 10, **caractérisé en ce que** le collet de remplissage d'huile (3) est disposé sur la douille filetée (11).

13. Dispositif de remplissage selon la revendication 12, **caractérisé en ce que** le collet de remplissage d'huile (3) et la douille filetée (11) sont formés d'un seul tenant.

14. Dispositif de remplissage pour la régulation du niveau d'huile dans des cuvettes-carters de moteurs et d'engrenages, avec une ouverture (101) dans le fond de la cuvette-carter (102) qui peut être fermée par une vis de purge d'huile (110), un collet de remplissage d'huile (103) étant disposé au-dessus de l'ouverture (101) et le collet de remplissage d'huile (103) dépassant dans l'espace intérieur (104) de la cuvette-carter et l'extrémité libre (106) du collet de remplissage d'huile (103) formant une ouverture de trop-plein (107), un élément annulaire ou tubulaire (105) disposé à l'intérieur du collet de remplissage d'huile (103) étant capable de translation dans le sens de l'axe longitudinal du collet de remplissage d'huile (103) et/ou de rotation dans le sens radial et ouvrant et fermant une ouverture latérale (109) dans le collet de remplissage d'huile.

15. Cuvette-carter contenant le dispositif de remplissage selon l'une des revendications 1 à 14.
